# EUROPEAN PATENT SPECIFICATION

(11) **EP 3 183 957 B1**
(45) Date of publication and mention of the grant of the patent: **24.04.2024**
(21) Application number: 16206445.5
(22) Date of filing: 22.12.2016
(51) Int. Cl.: A01K 27/00

(54) **A HANDGRIP FOR A LEASH AND A COMBINATION OF THE HANDGRIP AND A FUNCTIONAL ELEMENT**
EIN HALTEGRIFF FÜR EINE LEINE UND EINE KOMBINATION DES HALTEGRIFFS UND EINES FUNKTIONALEN ELEMENTES
UNE POIGNÉE POUR UNE LAISSE ET UNE COMBINAISON D'UNE POIGNÉE ET D'UN ÉLÉMENT FONCTIONNEL

(30) Priority: 23.12.2015 NL 2016030
(43) Date of publication of application: 28.06.2017
(73) Proprietor: Nano Pet Products LLC, Norwalk, CT 06851 (US)
(72) Inventor: ONTHANK, Chris Howse, Norwalk, CT 06851 (US)
(74) Representative: Plaggenborg, Menko Bernard

(56) References cited:
- DE-U1- 9 112 529
- NL-C- 2 011 191
- US-A- 5 826 547
- US-A1- 2008 216 767
- US-A1- 2010 018 468

## Description

The present invention relates to a handgrip according to claim 1.

A handgrip for coupling a leash is known in the art. However, these known handgrips relate to retractable leashes.

As regards the available state of the art, reference is made to US 5826547 (1998) wherein a hollow tube is provided with a rope for leashing a dog. Items may be stored inside said tube. A user must wrap his fingers around the rope, which makes use of this item cumbersome and painful when walking a dog.

NL 2011191 (2015) relates to a leash handle with a tube-like device provided with a large and bulky container for storing a retractable leash. This device is very heavy due to the container for the retractable leash. Filling the tube-like part of this leash handle even adds to the weight, as does the addition of further add-ons to this device.

US 2008/0216767 A1 (2008) relates to a leash handle comprising a tube-like handle portion and a separately provided container. The container is provided with add-ons or inserts for carrying bags or dishes and the like.

DE (Gebrauchsmuster) 9112529.4 (1993) relates to a device for containing a dog leash. As regards the shape of the device it resembles NL 2011191 to some extent. The tube-like handle portion is connected to a large and bulky container for storing a retractable leash. This device is very heavy due to the container for the retractable leash.

US 2010/0018468 A1 (2010) also resembles the shape of the device according to NL 2011191 mentioned above. The handle portion is connected to a large and bulky container for storing a retractable leash and is embodied for storing provisions for the dog or its user. This device is very heavy due to the container for the retractable leash and the provisions for the dog.

These known handgrips have a common disadvantage, namely a relatively high weight and their bulky appearance.

These problems may be solved by just holding a leash in one's hand. However, this provides a generally known disadvantage in that high forces are directly forwarded to one's hand and wrist, leading to physical problems. Also, when holding the leash itself in one's hand said hand is occupied such that any other items must be held in the other hand, leaving no room for further activities.

The invention now aims at providing a handgrip for a leash for alleviating the above mentioned problems.

The invention especially relates to a handgrip allowing one to combine a series of functions in said handgrip.

The invention further aims at providing a handgrip for a leash allowing a user to use his other hand for a still other function.

So as to obtain at least one of the above mentioned aims, the handgrip according to the present invention comprises the set of features as mentioned in claim 1. The handgrip according to the invention allows one to simply and quickly add a functional member part to the body of the handgrip or to remove same therefrom. Also, the known disadvantage in that high forces are directly forwarded to one's hand and wrist, leading to physical problems, is effectively eliminated by the handgrip according to the present invention.

Hence, the invention relates to a handgrip for coupling a leash, comprising a body with a connector for coupling said leash, wherein said body has an elongated bent shape comprising a grip part for holding said handgrip with a hand, both longitudinal ends of said body having a recess with a first coupling part for cooperation with a functional member part having a second coupling part, characterized in that said body has a relatively long outer part and a relatively shorter inner part, such that said recesses at longitudinal ends of said body are positioned at an angle with respect to each other, wherein an angle between longitudinal axes through a first and a second of said handgrip's recesses is between 100° and 170°.

The handgrip according to the present invention provides the advantage that it may be provided with two connectors, each at opposite ends of the handgrip. Such provides an excellent weight distribution, which is very comfortable for the user.

According to a preferred embodiment, said first and second coupling parts being mutually cooperating bayonet closures. Such provides an easy and quick addition and removal of said functional member part to said body. However, the invention is not limited to the use of a bayonet closure, providing the connectable parts with mutually cooperating thread is a possible embodiment, as well.

So as to obtain a combination of body and functional member part, it is preferred that an opening to said recess is substantially cylindrical. Such provides for a smooth closing and opening of said bayonet closure.

An especially preferred embodiment is comprised of a combination comprising the handgrip with a functional member part comprising a flashlight, said flashlight substantially directing away from said second coupling part. Such allows a user to simultaneously hold the leash and direct a flashlight, which is especially useful when walking a dog in the dark.

An especially advantageous function is obtained by providing a control button on the handgrip, allowing a user to easily switch the flashlight on or off. Accordingly, the flashlight is operable by means of a control button on the handgrip.

Since the flashlight is disconnectable from the handgrip, it provides the advantage that it can be charged in a docking station. The connection for charging the flashlight may be provided at the inner part, to wit the part of the flashlight that is positioned inside the handgrip when in use. To that end, the functional member comprising the flashlight is provided with a rechargeable battery.

So as to improve visibility to other traffic preference is given to a combination comprising the handgrip comprising within said recess a light guiding element leading towards a position at an outside of said handgrip, for example a light emitting display, and wherein said functional member part comprises a light source directing towards said light guiding element at the inside of said handgrip, such that said light is visible at said outside of said handgrip. The light source provided at the functional member part ensures visibility to following traffic. This combination of handgrip with a functional member providing a safety light on the handgrip is a novel feature improving safety of the user.

It may be preferred to hold more than one handgrip, for example when walking more than a single dog. In such case, preference is given to a combination comprising the handgrip wherein said functional member part is comprised of a connector comprising at a first position said second coupling part for coupling said connector with said handgrip and at a second position another second coupling part for coupling said connector with another handgrip, thereby coupling two handgrips through said connector.

The connection between the body and the functional member part is preferably obtained by a bayonet closure wherein the body of said handgrip has a substantially circumferential edge defining said recess, said recess being enclosed by an inner wall extending inwardly from said edge, and wherein said functional member part has a shoulder abutting said edge when in mutually coupled position and a side wall at least partly aligned with said inner wall, each of said inner wall and side wall comprising a mutually cooperating protrusion such that when in a coupled position the protrusion on the inner wall of the body is positioned between the protrusion on the side wall of said functional member part and the body's edge. This ensures an easy and quick coupling of body and functional member part. As a matter of fact, said parts may be embodied such that the inner wall is provided on the functional member part.

So as to be able to easily add another functionality, a washer may be positioned between said body and said functional member part. Said washer may be provided with another function, for example a clip for holding a bag, like a poop bag. In combination with a functional member part providing a flash light function, such washer adds additional functionality without substantially adding weight or volume to the handgrip according to the invention.

As a matter of fact, said functional member part as such may also comprise a connector that is embodied for coupling a bag, preferably a poop bag.

An embodiment according to the invention is comprised of a handgrip with a body having an elongate bent shape, providing a relatively long outer part and a relatively short inner part. In such embodiment, a control button for controlling a functional member part is preferably provided at said relatively long outer part of said body.

Allowing a user to connect a forceful functional member to the handgrip is obtainable through a double lock. A first connection may be provided near an outer rim of the body, whereas a second connection may be provided at a position inside the handgrip. For example, this allows a ball thrower to be connected to the handgrip according to the present invention. Also an umbrella can be connected properly to the handgrip according to the present invention, most preferably by means of such double lock.

The advantage of a connector provided at the handgrip allows a user to connect the handgrip itself to another item, for example to a bike when "biking" a dog instead of walking a dog. Also, the handgrip may be connected to a stroller or a shopping cart if provided with a mutually operable connection. This allows one to have at least one and in many cases even two hands free for other activities.

A still highly preferred embodiment is obtainable by connecting a plurality of functional members to a single handgrip. Each first functional member may be provided with its own second connector, allowing another functional member to be stacked upon said first functional member. Such stacks may be repeated as many times as manageable by the user.

The invention will hereafter be described by way of a drawing. The drawing shows in:
Fig. 1 a schematic perspective view of a handgrip according to the invention,
Fig. 2 a schematic view of a first side of the handgrip according to Fig. 1 with a top cap detached from the body,
Fig. 3 the handgrip according to Fig. 2 from a different angle,
Fig. 4 a schematic view from a second side of the handgrip according to Fig. 1 with a bottom cap detached from the body, and
Fig. 5 the handgrip according to Fig. 4 from another angle.

In the figures, the same and similar parts are identified and denoted by the same reference numerals. However, for ease of understanding the invention, not all parts that are necessary for a practical embodiment are shown in the drawing. The drawings only show schematic embodiments.

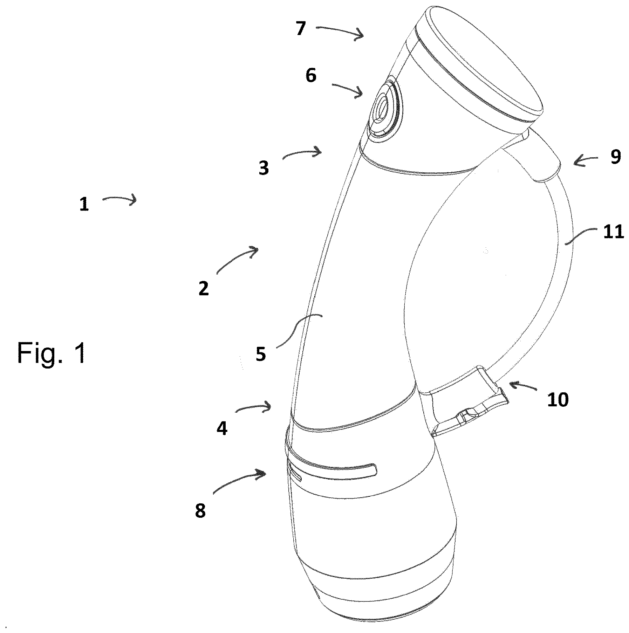

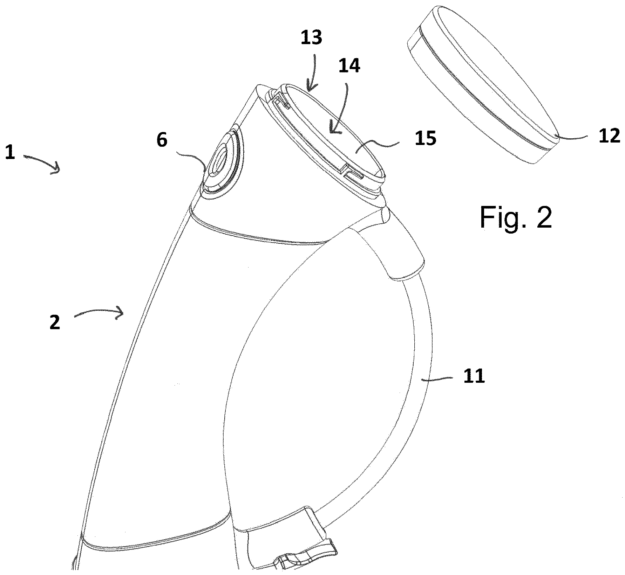

Fig. 1 and Fig. 2 show a perspective view of a handgrip 1 according to the present invention. The handgrip 1 comprises a body 2 with a grip part 5 to be held by the hand of a user. For example, the thumb part of a hand may be positioned near a first end 3 of said grip part 5, whereas the pink of the hand of said user may be positioned near a second end 4 of said grip part 5. The fingers or knuckles of the hand may be positioned between the grip part 5 and a guiding rail 11. This allows one to easily control a button 6, for example for controlling a flash light or a clicker, provided at an end part 7 of said handgrip 1. Such multi-function control button is a novel feature providing huge advantage to the handgrip since many different functional members may be controlled by a single handgrip. In the embodiment shown, the other end 8 of said handgrip 1 comprises a container for bags.

The guiding rail 11 may be provided with a connector (not shown) that is slidingly coupled to said guiding rail 11. The connector may travel between two end positions 9, 10 of said guiding rail 11. Hence, a leash that is coupled to said connector may travel between said end positions 9, 10 as well.

Fig. 2 shows the handgrip 1 with a top cap 12 detached from the body 2. The cap 12 may be comprised of said flash light or a clicker. The button 6 is operably connected to a switch (not shown) of said flashlight for turning said light on or off. Analogously, the button may be operably connected to said clicker for operating same.

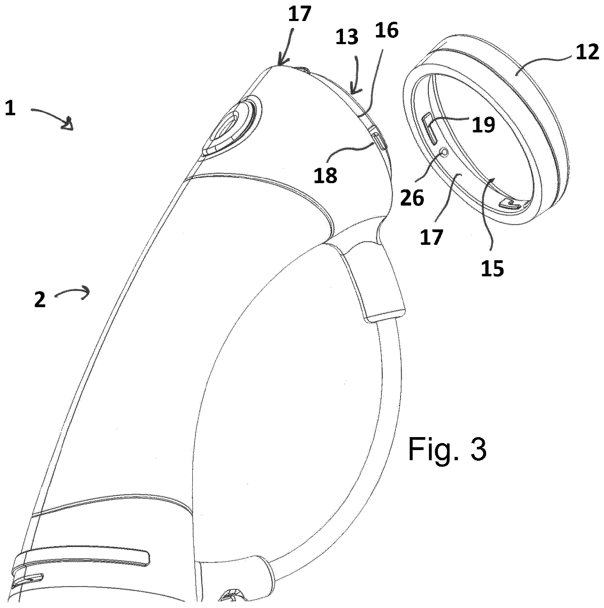

As shown in Fig. 2, the body 2 of said handgrip 1 has a substantially circumferential edge 13 defining a recess 14, said recess 14 being enclosed by an inner wall 15 extending inwardly from said edge 13 as well as an outer wall 16 extending at the outside from said edge 13. The body 2 has a shoulder 17 at some distance from the edge 13. The cap 12, being a functional member part like a flashlight or a clicker or any other functional member part, contacts with its inner end wall 15 as shown in Fig. 3, said edge 13 when in mutually coupled position. The inner part wall 17 of cap 12 is at least partly aligned with said outer wall 16. Each of said inner wall 17 and outer wall 16 comprising a mutually cooperating protrusion 18, 19 such that when in a coupled position the protrusion 18 on the wall 16 of body 2 is positioned between the protrusion 19 on wall 17 of said functional member part 12 and the body's edge 13. This ensures a locking of part 12 on said body 2.

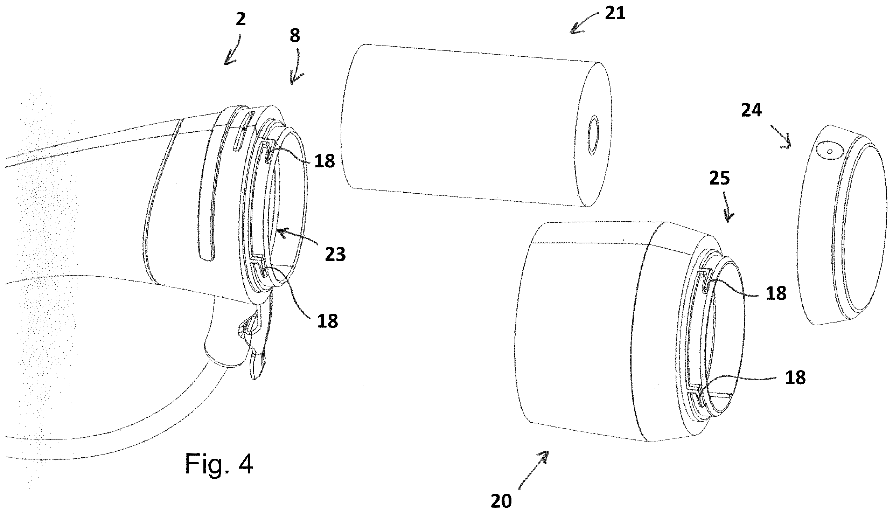

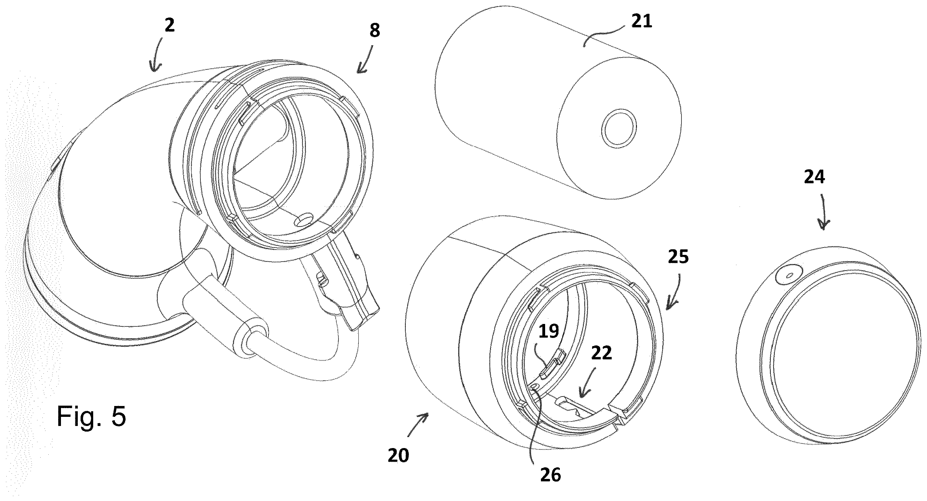

Fig. 4 shows a schematic perspective view of the handgrip 1 from the bottom side, i.e. the end of the handgrip 1 opposite the end as shown in Fig. 2 and 3. A relatively large functional bottom member 20 is shown in a detached situation with respect to the body 2. Bottom member 20 is substantially provided for locking a container 21 inside body 2 of handgrip 1. Said container 21 may comprise bags, for example for collecting dog's faeces. Said container 21 may be provided with an opening (not shown) at its side, for removing bags through a slot 22 (see Fig. 5) provided in said bottom member 20. Hence, as a first step said container 21 is inserted inside a recess 23 at the body's bottom end 8, after which bottom member 20 is positioned on top of said bottom end 8, covering part of said container 21 protruding from said body 2. Then, end cap 24 is placed for covering the end 25 of said bottom member 20.

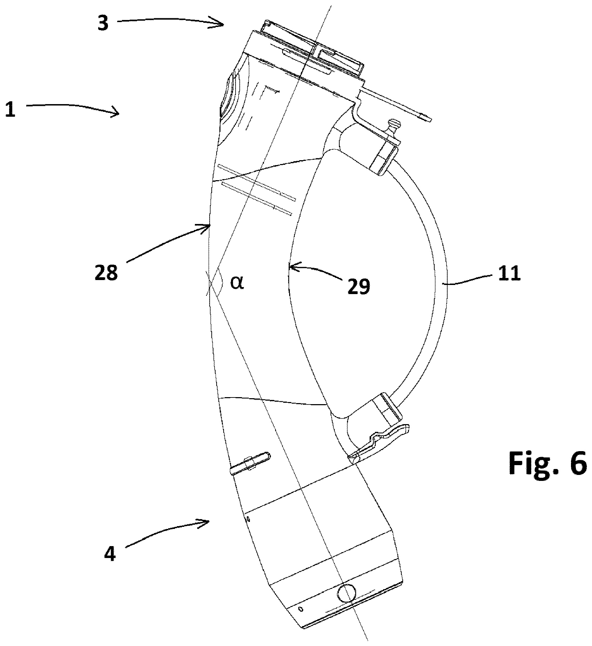

Fig. 6 shows a simplified view of a handgrip 1 according to the invention. It is clear that both longitudinal ends 3, 4 of the handgrip 1 are positioned at an angle "a" with respect to each other. Note that at end 4 a connector has been coupled. This angle α is about 140°. Due to the bent shape of the handgrip 1, the handgrip has a relatively long outer part 28 and a relatively shorter inner part 29. When holding the handgrip 1, the fingers will be positioned mostly at the shorter part 29, whereas the palm of the hand will be positioned substantially at longer part 28.

From the figures it is clear that a versatile handgrip 1 is obtained. An advantage of the present handgrip is that many functions may be combined in a single handgrip 1, as mentioned above. More in particular, it is preferred if all connecting members 18, 19 are substantially identical such that an end cap 24 may be used for covering both the bottom member 20 and top end 7 of body 2.

A click-on coupling is obtained with the combination of mutually cooperating protrusion 18, 19 by providing a further protrusion 26, as shown in Fig. 3 and Fig. 5. Part 27 of protrusion 18 is locked behind said protrusion 26, ensuring a safe coupling.

Other functional members may be used that have not been mentioned in this description. It is clear that all additional functional members making use of the handgrip according to the present invention fall under the scope of protection of the appended claims.

The invention is not limited to the embodiments as mentioned above and as shown in the drawing. The invention is limited only by the appending claims.

## Claims

1. A handgrip (1) for coupling a leash, comprising a body (2) with a guiding rail (11) for coupling said leash, wherein said body has an elongated bent shape comprising a grip part (5) for holding said handgrip (1) with a hand, both longitudinal ends (7, 8) of said body (2) having a recess (14, 23) with a first coupling part (18) for cooperation with a functional member part (12) having a second coupling part (19), **characterized in that** said body (2) has a relatively long outer part (28) and a relatively shorter inner part (29), such that said recesses (14, 23) at longitudinal ends (7, 8) of said body (2) are positioned at an angle with respect to each other, wherein the angle between longitudinal axes through a first (14) and a second (23) of said handgrip's (1) recesses (14, 23) is between 100° and 170°.

2. A handgrip (1) according to claim 1, said first and second coupling parts (18, 19) being mutually cooperating bayonet closures.

3. A handgrip (1) according to claim 1, wherein an opening to said recess (14, 23) is substantially cylindrical.

4. A handgrip (1) according to claim 1, wherein an angle between longitudinal axes through a first (14) and a second (23) of said handgrip's (1) recesses (14, 23) is between 110° and 160°, preferably between 120° and 160°.

5. A handgrip (1) according to claim 1, said body (2) having a control button for controlling a functional member part (12) being provided at said relatively long outer part (28) of said body (2).

6. A handgrip (1) according to claim 1, wherein to connect a forceful functional member to the handgrip is obtainable through a first connection that is provided near an outer rim of the body (2), and a second connection that is provided at a position inside the handgrip (1).

7. A combination of a handgrip (1) according to claim 1 and a functional element (12), said functional element (12) having on its inner wall second coupling parts (19) for cooperative coupling with said handgrip (1) and the handgrip having a substantially circular edge (13) defining a recess (14) with coupling parts (18) on its outer wall (16) for coupling functional element (12) thereto.

8. A combination of a handgrip (1) according to claim 1 and a functional element (20), said functional element (20) having at a first end (20) a second coupling part (19) for cooperative coupling with said handgrip (1) and at an opposite end (25) a recess with a coupling part (18) substantially similar to said handgrip's (1) first coupling part (18) for coupling another functional element (24).

9. A combination according to claim 7 or 8, said functional member part (12) comprising a flashlight, said flashlight substantially directing away from said second coupling part (19).

10. A combination according to claim 9, said handgrip (1) comprising within said recess (14, 23) a light guiding element leading towards a position at an outside of said handgrip (1) and wherein said functional member part (12) comprises a light source directing towards said light guiding element at the inside of said handgrip (1), such that said light is visible at said outside of said handgrip (1).

11. A combination according to claim 7 or 8, wherein said functional member part (12) is comprised of a connector comprising at a first position said second coupling part (19) for coupling said connector with said handgrip (1) and at a second position another second coupling part (19) for coupling said connector with another handgrip (1), thereby coupling two handgrips (1) through said connector.

12. A combination according to claim 7 or 8, the body (2) of said handgrip (1) having a substantially circumferential edge (13) defining said recess (14, 23), said recess (14, 23) being enclosed by an inner wall (17) extending inwardly from said edge (13), and said functional member part (12) having a shoulder abutting said edge (13) when in mutually coupled position and having a side wall at least partly aligned with said inner wall, each of said inner wall and side wall comprising a mutually cooperating protrusion such that when in a coupled position the protrusion on the inner wall of the body (2) is positioned between the protrusion on the side wall of said functional member part (12) and the body's (2) edge.

13. A combination according to claim 7 or 8, further comprising a washer positioned between said body (2) and said functional member part (12).

14. A combination according to claim 7 or 8, said functional member part (12) comprising a connector that is embodied for coupling a bag, preferably a poop bag.

## Patentansprüche

1. Handgriff (1) zum Ankuppeln einer Leine, umfassend einen Körper (2) mit einer Führungsschiene (11) zum Ankuppeln der Leine, worin der Körper eine langgestreckte, gebogene Form aufweist, die einen Griffteil (5) zum Halten des Handgriffs (1) mit einer Hand umfasst, worin beide Längsenden (7, 8) des Körpers (2) eine Aussparung (14, 23) mit einem ersten Kupplungsteil (18) zum Zusammenwirken mit einem Funktionselementteil (12) mit einem zweiten Kupplungsteil (19) aufweisen, **dadurch gekennzeichnet, dass** der Körper (2) einen relativ langen äußeren Teil (28) und einen relativ kürzeren inneren Teil (29) aufweist, so dass die Aussparungen (14, 23) an den Längsenden (7, 8) des Körpers (2) in einem Winkel zueinander angeordnet sind, worin der Winkel zwischen den Längsachsen durch eine erste (14) und eine zweite (23) der Aussparungen (14, 23) des Handgriffs (1) zwischen 100° und 170° beträgt.

2. Handgriff (1) nach Anspruch 1, worin die ersten und zweiten Kupplungsteile (18, 19) miteinander zusammenwirkende Bajonettverschlüsse sind.

3. Handgriff (1) nach Anspruch 1, worin eine Öffnung zu der Aussparung (14, 23) im Wesentlichen zylindrisch ist.

4. Handgriff (1) nach Anspruch 1, worin ein Winkel zwischen den Längsachsen durch eine erste (14) und eine zweite (23) der Aussparungen (14, 23) des Handgriffs (1) zwischen 110° und 160°, vorzugsweise zwischen 120° und 160°, beträgt.

5. Handgriff (1) nach Anspruch 1, worin der Körper (2) einen Steuerknopf zur Steuerung eines Funktionselementteils (12) aufweist, der an dem relativ langen äußeren Teil (28) des Körpers (2) vorgesehen ist.

6. Handgriff (1) nach Anspruch 1, worin die Verbindung eines kraftvollen Funktionselements mit dem Handgriff durch eine erste Verbindung, die nahe eines äußeren Rands des Körpers (2) vorgesehen ist, und eine zweite Verbindung, die an einer Position innerhalb des Handgriffs (1) vorgesehen ist, möglich ist.

7. Kombination aus einem Handgriff (1) nach Anspruch 1 und einem Funktionselement (12), worin das Funktionselement (12) an seiner Innenwand zweite Kupplungsteile (19) zum Zusammenkuppeln mit dem Handgriff (1) aufweist und der Handgriff einen im Wesentlichen kreisförmigen Rand (13) aufweist, der eine Aussparung (14) mit Kupplungsteilen (18) an seiner Außenwand (16) zum Ankuppeln des Funktionselements (12) definiert.

8. Kombination aus einem Handgriff (1) nach Anspruch 1 und einem Funktionselement (20), worin das Funktionselement (20) an einem ersten Ende (20) ein zweites Kupplungsteil (19) zum Zusammenkuppeln mit dem Handgriff (1) und an einem gegenüberliegenden Ende (25) eine Aussparung mit einem Kupplungsteil (18) zum Kuppeln eines anderen Funktionselements (24) aufweist, das dem ersten Kupplungsteil (18) des Handgriffs (1) im Wesentlichen ähnlich ist.

9. Kombination nach Anspruch 7 oder 8, worin das Funktionsbauteil (12) eine Taschenlampe umfasst, worin die Taschenlampe im Wesentlichen von dem zweiten Kupplungsteil (19) weg gerichtet ist.

10. Kombination nach Anspruch 9, worin der Handgriff (1) in der Aussparung (14, 23) ein Lichtleitelement aufweist, das zu einer Position an der Außenseite des Handgriffs (1) führt, und worin das Funktionselementteil (12) eine Lichtquelle aufweist, die auf das Lichtleitelement an der Innenseite des Handgriffs (1) gerichtet ist, so dass das Licht an der Außenseite des Handgriffs (1) sichtbar ist.

11. Kombination nach Anspruch 7 oder 8, worin das Funktionselementteil (12) aus einem Verbinder besteht, der an einer ersten Position das zweite Kupplungsteil (19) zum Kuppeln des Verbinders mit dem Handgriff (1) und an einer zweiten Position ein weiteres zweites Kupplungsteil (19) zum Kuppeln des Verbinders mit einem anderen Handgriff (1) aufweist, wodurch zwei Handgriffe (1) durch den Verbinder verbunden werden.

12. Kombination nach Anspruch 7 oder 8, worin der Körper (2) des Handgriffs (1) eine im Wesentlichen umlaufende Kante (13) aufweist, die die Aussparung (14, 23) definiert, worin die Aussparung (14, 23) von einer Innenwand (17) umschlossen ist, die sich von der Kante (13) nach innen erstreckt, und worin das Funktionselementteil (12) eine Schulter aufweist, die an der Kante (13) anliegt, wenn es sich in einer miteinander gekoppelten Position befindet, und eine Seitenwand aufweist, die zumindest teilweise mit der Innenwand ausgerichtet ist, worin sowohl die Innenwand als auch die Seitenwand einen gegenseitig zusammenwirkenden Vorsprung aufweisen, so dass in einer gekoppelten Position der Vorsprung an der Innenwand des Körpers (2) zwischen dem Vorsprung an der Seitenwand des Funktionselementteils (12) und der Kante des Körpers (2) angeordnet ist.

13. Kombination nach Anspruch 7 oder 8, welche ferner eine zwischen dem Körper (2) und dem Funktionselementteil (12) angeordnete Unterlegscheibe umfasst.

14. Kombination nach Anspruch 7 oder 8, worin das Funktionselementteil (12) einen Verbinder umfasst, der zum Ankoppeln eines Beutels, vorzugsweise eines Kotbeutels, ausgebildet ist.

## Revendications

1. - Poignée (1) pour couplage à une laisse, comprenant un corps (2) avec un rail de guidage (11) pour couplage à ladite laisse, ledit corps ayant une forme courbée allongée comprenant une partie de préhension (5) pour tenir ladite poignée (1) avec une main, les deux extrémités longitudinales (7, 8) dudit corps (2) ayant un évidement (14, 23) avec une première partie de couplage (18) pour une coopération avec une partie élément fonctionnel (12) ayant une seconde partie de couplage (19), **caractérisée par le fait que** ledit corps (2) a une partie extérieure relativement longue (28) et une partie intérieure relativement plus courte (29), de telle sorte que lesdits évidements (14, 23) aux extrémités longitudinales (7, 8) dudit corps (2) sont positionnés à un angle l'un par rapport à l'autre, l'angle entre les axes longitudinaux passant par un premier (14) et un second (23) des évidements (14, 23) de ladite poignée (1) étant compris entre 100° et 170°.

2. - Poignée (1) selon la revendication 1, lesdites première et seconde parties de couplage (18, 19) étant des fermetures à baïonnette coopérant mutuellement.

3. - Poignée (1) selon la revendication 1, dans laquelle une ouverture donnant sur ledit évidement (14, 23) est sensiblement cylindrique.

4. - Poignée (1) selon la revendication 1, dans laquelle un angle entre les axes longitudinaux passant par un premier (14) et un second (23) des évidements (14, 23) de ladite poignée (1) est compris entre 110° et 160°, de préférence entre 120° et 160°.

5. - Poignée (1) selon la revendication 1, ledit corps (2) ayant un bouton de commande pour commander une partie élément fonctionnel (12) situé sur la partie extérieure relativement longue (28) dudit corps (2).

6. - Poignée (1) selon la revendication 1, dans laquelle la liaison d'un élément fonctionnel de force à la poignée peut être obtenue par une première liaison qui est prévue près d'un rebord extérieur du corps (2) et une seconde liaison qui est prévue à une position à l'intérieur de la poignée (1).

7. - Combinaison d'une poignée (1) selon la revendication 1 et d'un élément fonctionnel (12), ledit élément fonctionnel (12) ayant sur sa paroi intérieure des secondes parties de couplage (19) pour un couplage coopératif avec ladite poignée (1) et la poignée ayant un bord sensiblement circulaire (13) définissant un évidement (14) avec des parties de couplage (18) sur sa paroi extérieure (16) pour un couplage de l'élément fonctionnel (12) à celui-ci.

8. - Combinaison d'une poignée (1) selon la revendication 1 et d'un élément fonctionnel (20), ledit élément fonctionnel (20) ayant à une première extrémité (20) une seconde partie de couplage (19) pour un couplage coopératif avec ladite poignée (1) et à une extrémité opposée (25) un évidement avec une partie de couplage (18) sensiblement similaire à la première partie de couplage (18) de ladite poignée (1) pour un couplage d'un autre élément fonctionnel (24).

9. - Combinaison selon la revendication 7 ou 8, ladite partie élément fonctionnel (12) comprenant une lampe de poche, ladite lampe de poche étant dirigée sensiblement à l'opposé de la seconde partie de couplage (19).

10. - Combinaison selon la revendication 9, ladite poignée (1) comprenant à l'intérieur dudit évidement (14, 23) un élément de guidage de lumière menant vers une position à un extérieur de ladite poignée (1) et ladite partie élément fonctionnel (12) comprenant une source de lumière dirigée vers ledit élément de guidage de lumière à l'intérieur de ladite poignée (1), de telle sorte que ladite lumière est visible audit extérieur de ladite poignée (1).

11. - Combinaison selon la revendication 7 ou 8, dans laquelle ladite partie élément fonctionnel (12) est constituée d'un connecteur comprenant, dans une première position, ladite seconde partie de couplage (19) pour coupler ledit connecteur avec ladite poignée (1) et, dans une seconde position, une autre seconde partie de couplage (19) pour coupler ledit connecteur avec une autre poignée (1), couplant ainsi deux poignées (1) par l'intermédiaire dudit connecteur.

12. - Combinaison selon la revendication 7 ou 8, le corps (2) de ladite poignée (1) ayant un bord sensiblement circonférentiel (13) définissant ledit évidement (14, 23), ledit évidement (14, 23) étant entouré par une paroi intérieure (17) s'étendant vers l'intérieur à partir dudit bord (13), et ladite partie élément fonctionnel (12) ayant un épaulement en butée contre ledit bord (13) en position de couplage mutuel et ayant une paroi latérale au moins partiellement alignée avec ladite paroi intérieure, chacune desdites paroi interne et paroi latérale comprenant une saillie coopérant mutuellement, de sorte qu'en position de couplage la saillie sur la paroi intérieure du corps (2) est positionnée entre la saillie sur la paroi latérale de ladite partie élément fonctionnel (12) et le bord du corps (2).

13. - Combinaison selon la revendication 7 ou 8, comprenant en outre une rondelle positionnée entre ledit corps (2) et ladite partie élément fonctionnel (12).

14. - Combinaison selon la revendication 7 ou 8, ladite partie élément fonctionnel (12) comprenant un connecteur qui est mis en oeuvre pour couplage à un sac, de préférence un sac à déjections.
